# EUROPÄISCHE PATENTSCHRIFT

(11) **EP 1 956 808 B1**
(45) Veröffentlichungstag und Bekanntmachung des Hinweises auf die Patenterteilung: **27.05.2009**
(21) Anmeldenummer: 08150970.5
(22) Anmeldetag: 01.02.2008
(51) Int. Cl.: H04M 1/60, B60R 11/02

(54) **Freisprechanlage**
Hands-free device
Installation mains libres

(30) Priorität: 06.02.2007 DE 202007001708 U
(43) Veröffentlichungstag der Anmeldung: 13.08.2008
(62) Teilanmeldung aus: 08171745.6
(73) Patentinhaber: Jung, Dietmar, 51107 Köln (DE); Venhofen, Edgar, 32549 Bad Oeynhausen (DE)
(72) Erfinder: Jung, Dietmar, 51107 Köln (DE); Venhofen, Edgar, 32549 Bad Oeynhausen (DE)
(74) Vertreter: Gröschel, Andreas

(56) Entgegenhaltungen:
- EP-A- 1 184 225
- WO-A-20/05032893
- DE-A1- 10 004 965
- FR-A- 2 844 416
- US-A1- 2002 068 605
- US-A1- 2003 109 290

## Beschreibung

Die Erfindung betrifft eine Freisprechanlage für ein Mobiltelefon, mit der es beispielsweise einem Autofahrer ermöglicht wird mit seinem Mobiltelefon zu telefonieren ohne seine Hände vom Steuerrad seines Kraftfahrzeuges zu nehmen.

Es sind Freisprechanlagen für Mobiltelefone bekannt, die im Innenraum eines Kraftfahrzeuges befestigt sind. Derartige Freisprechanlagen sind teilweise an Stellen befestigt, die vom Fahrer deutlich entfernt sind, so dass nicht zuletzt aufgrund der Entfernung und der beim Fahren auftretenden Nebengeräuschen die Verständlichkeit beim Telefonieren beeinträchtigt ist. Um die Verständlichkeit beim Telefonieren zu verbessern, ist es möglich die Freisprechanlage näher beim Fahrer zu befestigen. Allerdings führt die Nähe der Freisprechanlage dazu, dass der Fahrer bei der Bedienung des Kraftfahrzeuges aufgrund der im Weg stehenden Freisprechanlage behindert wird und/oder in seiner Sicht auf die Strasse beeinträchtigt wird. Bedienungs- und Sichtbehinderungen entstehen insbesondere auch durch an die Freisprechanlage angeschlossene flexible Mikrofone und Energieversorgungskabel. Somit wird aufgrund der Bedienungs- und Sichtbehinderungen bei derartigen Freisprechanlagen die Unfallgefahr erhöht.

Aus DE 20 2004 014 643 ist eine Freisprechanlage bekannt, die in einen Rückspiegel des Kraftfahrzeuges integriert ist. Das Mikrofon und die Energieversorgungskabel der Freisprechanlage sind ebenfalls im Rückspiegel integriert, wobei die Energieversorgungskabel durch eine Halterung des Rückspiegels in das Dach des Kraftfahrzeuges und von dort zu einer Autobatterie verlaufen.

Ferner ist es aus DE 10 2004 007 253 B3 bekannt eine Freisprechanlage in einen innerhalb eines Lenkradrings angeordneten Zentralbereich eines Kraftfahrzeug-Lenkrads zu integrieren. Die Bedienung der Freisprechanlage erfolgt hierbei über Tasten, die im Zentralbereich und/oder dem Lenkradring eingelassen sind. Die Stromversorgung und Kommunikation mit dem Mobiltelefon erfolgt hierbei innerhalb des Lenkrads.

Nachteilig bei einer derartigen Freisprechanlage ist, dass die Geometrie des Kraftfahrzeuges deutlich an die Freisprechanlage angepasst werden muss, um die Funktionalität der Freisprechanlage zu ermöglichen. Dies erhöht den Entwicklungs- und Designaufwand bei der Konzeption des Kraftfahrzeuges und führt dadurch zu höheren Kosten bei gleichzeitig geringer Flexibilität bei der Funktionalität der Freisprechanlage.

Aus EP 1 184 225 A1 ist es bekannt einzelne Teile einer Freisprechanlage, insbesondere die Bedienelemente, mit dem Lenkradring eines Kraftfahrzeug-Lenkrads zu verbinden.

Aus FR 2 844 416 ist es bekannt ein Gehäuse mit Hilfe einer Befestigungsvorrichtung beabstandet zu einem Lenkradring eines Lenkrads eines Kraftfahrzeugs mit dem Lenkradring lösbar zu verklippsen. Mit dem Gehäuse, das ein Mikrofon aufweist, kann ein Mobiltelefon verbunden werden, das über ein Kabel mit dem Mikrofon verbunden werden kann.

Aufgabe der Erfindung ist es eine Freisprechanlage für ein Mobiltelefon zu schaffen, die ohne die Unfallgefahr wesentlich zu erhöhen eine gute Verständlichkeit beim Telefonieren ermöglicht und einfach in ein Kraftfahrzeug integriert werden kann.

Die Aufgabe wird durch die im Anspruch 1 angegebenen Merkmale gelöst. Vorteilhafte Ausgestaltungen der Erfindung sind in den Unteransprüchen angegeben.

Die erfindungsgemäße Freisprechanlage für ein Mobiltelefon weist ein Gehäuse auf, in dem eine elektrische Kommunikationseinrichtung zur drahtlosen Kommunikation mit dem Mobiltelefon angeordnet ist. Mit der Kommunikationseinrichtung ist insbesondere innerhalb des Gehäuses ein Mikrofon verbunden, über das beispielsweise auch eine Sprachanwahl einer Telefonnummer erfolgen kann. Erfindungsgemäß ist mit dem Gehäuse eine Befestigungsvorrichtung zur lösbaren Verbindung mit einem Lenkradring eines Kraftfahrzeug-Lenkrads lösbar verbunden, wobei das Gehäuse entsprechend der Krümmung des Lenkradrings bogenförmig ausgestaltet ist, wobei sämtliche Elemente der Freisprechanlage (10) in einem gemeinsamen Bauteil zusammengefasst sind. Befestigungsvorrichtung zur lösbaren Verbindung mit einem Lenkradring eines Kraftfahrzeug-Lenkrads auf.

Da die erfindungsgemäße Freisprechanlage mit Hilfe der speziell angepassten Befestigungsvorrichtung als Ganzes an dem Kraftfahrzeug-Lenkrad befestigt werden kann, befindet sich die Freisprechanlage an einer Position, die besonders nahe an der Sprechrichtung des Fahrers liegt. Eine gute Verständlichkeit beim Telefonieren wird dadurch gewährleistet. Ferner befindet sich die Freisprechanlage an einer Position, in der sie nicht die Sicht des Fahrers behindert, so dass eine signifikante Erhöhung der Unfallgefahr nicht auftritt. Die Wahrscheinlichkeit, dass die Freisprechanlage den Fahrer beim Lenken stört, ist, insbesondere wenn die Freisprechanlage an der Innenseite des Lenkrings vorzugsweise an der in Geradeausfahrt höchsten Stelle angeordnet ist, äußerst gering. Da sämtliche Elemente der Freisprechanlage in einem gemeinsamen Bauteil zusammengefasst sind, kann die Freisprechanlage einfach in das Kraftfahrzeug integriert werden, ohne dass es erforderlich ist im Kraftfahrzeug spezielle Vorkehrungen zur Integration der Freisprechanlage vorzusehen. Ferner kann ausschließlich eine Kommunikation zwischen dem Mobiltelefon und der Freisprechanlage gewährleistet werden, so dass es nicht erforderlich ist zwischengeschaltete Kommunikationsbauteile vorzusehen. Dadurch kann die Kommunikation zwischen der Freisprechanlage und dem Mobiltelefon unabhängig von im Kraftfahrzeug vorgesehen Kommunikationsbauteilen erfolgen, so dass auch bei ausgeschaltetem Kraftfahrzeug eine Bedienung möglich ist und auch im Betrieb des Kraftfahrzeugs keine Störungen und sonstige Interaktionen mit der Kraftfahrzeugelektronik stattfinden können. Stattdessen kann die Freisprechanlage mit Hilfe der Befestigungsvorrichtung bei Bedarf schnell eingebaut und/oder ausgebaut werden. Dies ermöglicht es die Freisprechanlage bei mehreren unterschiedlichen Kraftfahrzeugen unabhängig vom Kraftfahrzeugtyp zu verwenden.

Erfindungsgemäß weist die Befestigungsvorrichtung ein in radialer Richtung relativ zum Gehäuse bewegbares Halteelement zur drehfesten Fixierung der Freisprechanlage mit dem Lenkradring auf. Insbesondere weist die Befestigungsvorrichtung eine Feststelleinrichtung, insbesondere eine Schraubverbindung und/oder eine Rastverbindung, zur Fixierung der Befestigungsvorrichtung im montierten Zustand aufweist. Durch die Feststelleinrichtung kann ein unbeabsichtigtes Lösen auch bei großen Kräften, beispielsweise bei einem Unfall, sicher verhindert werden. Beispielsweise kann bei einer Schraubverbindung beim Anziehen der Schraube das Halteelement mit einer vergleichsweise hohen Haltekraft an den Lenkradring angepresst werden. Ferner kann mit Hilfe der Befestigungsvorrichtung das Halteelement, das im montierten Zustand an dem Lenkradring anliegt, in verschiedenen Positionen arretiert werden. Das Haltelement kann beispielsweise in Bezug zum Lenkradring in radialer Richtung verschoben werden und in mehreren Zwischenstellungen arretiert werden. Dadurch ist es möglich unabhängig von dem Durchmesser des Lenkradrings die Freisprechanlage mit der Befestigungsvorrichtung an dem Lenkradring zu befestigen.

Vorzugsweise sind das Gehäuse und/oder die Befestigungsvorrichtung an die Kontur des Lenkradrings angepasst. Beispielsweise fügt sich das Gehäuse, in dem die Kommunikationseinrichtung und das Mikrofon angeordnet sind, in das Design des Lenkrads ein und schmiegt sich möglichst spaltlos ohne Spalt zwischen dem Lenkradrings und dem Gehäuse an den Lenkradring an. Das Gehäuse und/oder die Befestigungsvorrichtung können insbesondere im montierten Zustand, das heißt wenn die Freisprechanlage über die Befestigungsvorrichtung mit dem Lenkradring verbunden ist, in Finger-Vertiefungen des Lenkradrings eingreifen. Da die Finger-Vertiefungen in der Regel am gesamten Umfang des Lenkradrings angeordnet sind, um den Fingern der Hand des Fahrers einen definierten Halt und verbesserten Griff zu ermöglichen, kann die Freisprechanlage in nahezu jeder beliebigen Winkellage mit dem Lenkrad verbunden werden. Durch das zumindest teilweise Eingreifen der Bauteile der Freisprechanlage in die Finger-Vertiefungen wird die Stabilität der Verbindung der Freisprechanlage mit dem Lenkradring verbessert, da ein Verrutschen der Freisprechanlage in Umfangsrichtung vermieden wird.

Besonders bevorzugt weist das Gehäuse Bedienungselemente zum Bedienen der Freisprechanlage auf, wie beispielsweise Tasten, Kippschalter, berührungsempfindliche Flächen etc., die im Wesentlich seitlich am Gehäuse angeordnet sind. Da die Bedienungselemente nicht an der sich in Bezug zum Lenkradring im Wesentlich radial erstreckenden Vorderseite und Rückseite, sondern an der sich zwischen der Vorderseite und der Rückseite mit diesen verbundenen Seitenflächen angeordnet sind, kann der durch die Vorderseite und/oder die Rückseite bereitgestellte Platz für andere Funktionselemente der Freisprechanlage, wie beispielsweise ein Display oder Lautsprecherausgänge, genutzt werden. Die Freisprechanlage kann dadurch besonders klein und kompakt ausgestaltet sein. Besonders bevorzugt sind zumindest ein Teil der Bedienungselemente an der in Bezug zum Lenkradring radial nach innen weisenden Seite des Gehäuses angeordnet. Die Kraftrichtung beim Bedienen der Bedienuilgselemente weist in diesem Fall auf die radial nach innen weisende Seite des Lenkradrings, so dass ein Biege- und/oder Drehmoment, das zu einem Verdrehen der Freisprechanlage führen könnte, vermieden wird.

Vorzugsweise wird die Kommunikationseinrichtung von einer integrierten Energieeinheit, die von weiteren Energiequellen unabhängig operieren kann, mit elektrischer Energie versorgt. Durch die Energieeinheit, die vorzugsweise eine Batterie, insbesondere eine wiederaufladbare Batterie (Akku) aufweist, ist die Stromversorgung der Freisprechanlage unabhängig von einer externen Stromquelle, wie beispielsweise einer Autobatterie eines Kraftfahrzeuges, und dadurch energetisch autonom. Ein Kabelnetz, das bis zur Energiequelle durch das Fortbewegungsmittel verlegt werden muss und für deren Verlegung in der Karosserie des Fortbewegungsmittel der hierfür erforderliche Bauraum und eine entsprechende Infrastruktur bereitgestellt werden muss, ist nicht erforderlich.

Vorzugsweise sind die Energieeinheit und/oder die Kommunikationseinrichtung in Sprech- bzw. Blickrichtung eines Fahrers an der Rückseite des Gehäuses angeordnet, wodurch der Bewegungsbereich des Fahrers nicht unnötig eingeschränkt wird. Ferner wird dadurch Bauraum im vorderen Bereich bzw. in Umfangsrichtung eingespart, der anderweitig beispielsweise durch lösbar oder unlösbar mit dem Gehäuse verbundene elektronische Zusatzeinrichtungen genutzt werden kann. Beispielsweise kann in die Freisprechanlage ein Navigationssystem und/oder ein Positionsbestimmungssytem wie z. B. GPS integriert werden.

Vorzugsweise weist die erfindungsgemäße Freisprechanlage und/oder der Akku einen Elektroanschluss, beispielsweise eine Anschlussbuchse, auf, über die eine externe elektrische Energiequelle angeschlossen werden kann. Dadurch ist es prinzipiell möglich die Freisprechanlage ohne die integrierte Energieeinheit beispielsweise nur mit einer über einen Zigarettenanzünder angeschlossene Autobatterie zu betreiben. Besonders bevorzugt wird jedoch über den Elektroanschluss der Akku aufgeladen. Dies kann auch während der Fahrt z. B. mit Hilfe einer angeschlossenen Autobatterie erfolgen oder im ausgebauten Zustand, wenn die Freisprechanlage und/oder der Akku beispielsweise an ein herkömmliches Stromnetz angeschlossen ist.

Die Kommunikation der Kommunikationseinrichtung der Freisprechanlage mit dem Mobiltelefon erfolgt vorzugsweise per Funk, wie beispielsweise über Bluetooth. Dadurch werden störende Kabel vermieden. Vorzugsweise kann mindestens ein mit der Kommunikationseinrichtung verbundener Lautsprecher vorgesehen sein, wobei das Gehäuse insbesondere eine im montierten Zustand auf den Fahrer weisende Lautsprecherausgänge aufweist. Dies führt zu einer guten Akustik und verbessert den Telefonkomfort. Die Lautsprecherausgänge können auch als aufsteckbare und lösbare Zusatzbauteile ausgestaltet sein. Der mit der Kommunikationseinrichtung verbundene Lautsprecher kann Geräusche, insbesondere Sprache, abgehen, damit der Fahrer seinen über die Freisprechanlage angeschlossenen Gesprächspartner hören kann. Zusätzlich oder alternativ kann vorgesehen werden, dass die Kommunikationseinrichtung mit einer externen Tonanlage, die einen Lautsprecher aufweist, vorzugsweise drahtlos beispielsweise über den A2DP-Standard kommuniziert. Insbesondere weist die Freisprechanlage einen FM-Transmitter auf, mit dessen Hilfe auf einer Frequenz, die vom Autoradio empfangen werden kann, gesendet werden kann. Vorzugsweise ist der FM-Transmitter derart ausgestaltet, dass die aktuell beim Autoradio eingestellte Radiofrequenz vorzugsweise kabellos detektiert wird. Dadurch kann eine bestehende Infrastruktur genutzt werden, um die Tonqualität zu verbessern. Beispielsweise kann bei einem Telefonat das empfangene Gespräch des Telefonpartners über den Lautsprecher eines Autoradios und/oder eines CD-Players abgegeben werden. Hierzu wird ein Telefonat beispielsweise als ein von dem Autoradio empfangbares HF-Signal von der Kommunikationseinheit abgegeben, und von dem Autoradio auf einer bestimmten insbesondere vordefinierten Frequenz als FM-Radiosignal empfangen. Insbesondere, wenn dadurch gleichzeitig die Geräusche des Autoradios und/oder des CD-Players zumindest stiller geregelt werden, werden Nebengeräusche reduziert und der Telefonkomfort verbessert.

Vorzugsweise ist ein Daten-Anschluss, z.B. ein USB-Anschluss, Steckkarten-Anschluss o. ä., vorgesehen, über den Daten mit den elektronischen Geräten der Freisprechanlage ausgetauscht werden können. Dadurch können Daten der Kommunikationseinrichtung, wie z. B. ein- und ausgehende Telefonnummern, oder des Navigationssystems, wie z. B. gefahrene Strecke, ausgelesen werden. Ferner ist es möglich Daten in die Freisprechanlage einzugeben, beispielsweise um das Navigationssystem mit zusätzlichem Kartenmaterial zu versorgen oder eine neue Software für die Kommunikationseinrichtung aufzuspielen. Beispielsweise kann durch einfaches Einführen eines kleinen USB-Sticks eine speziell an das verwendete Mobiltelefon angepasste Software aufgespielt werden, so dass ohne Installationsaufwand die Freisprechanlage schnell an unterschiedliche Nutzer mit unterschiedlichen Mobiltelefonen angepasst werden kann.

Vorzugsweise weist die Freisprechanlage ein in das Gehäuse integriertes Display zur elektronischen Darstellung von Informationen auf. Dadurch kann beispielsweise die Uhrzeit, das Datum und ähnliche allgemeine Daten angezeigt werden. Besonders bevorzugt werden auf dem Display Daten angezeigt, die von einem ggf. vorgesehenen Navigationssystem mit Positionsbestimmungssystem ausgegeben werden oder die auf dem Display des Mobiltelefons erscheinen, wie z. B. Name und/oder Telefonnummer eines eingehenden Anrufs. Je nach Positionierung der Freisprechanlage in Relation zum Lenkradring, kann die Darstellung des Displays softwarebasiert gedreht werden. Wenn die Freisprechanlage statt an der geodätisch höchsten Stelle des Lenkradrings an der gegenüberliegenden untersten Stelle des Lenkradrings befestigt wird, kann die Darstellung im Display um 180° gedreht werden. Besonders bevorzugt detektiert die Freisprechanlage automatisch ihre Lage in Relation zur Schwerkraftrichtung, so dass selbst bei Lenkradbewegungen die Darstellung im Display immer gleich ausgerichtet ist.

Insbesondere kann über ein von der Freisprechanlage ausgehendes Signal ein Adressbuch des Mobiltelefons erhältlich sein, um auf dem Display einen Namen darzustellen, der über das erhaltene Adressbuch mit einer eingehenden Telefonnummer verknüpft ist. Dies erfolgt insbesondere dadurch, dass über ein von der Freisprechanlage vorzugsweise automatisch, beispielsweise beim Einschalten der Freisprechanlage, ausgehendes AT Command Signal in dem Mobiltelefon ein OPP (object push profil) Befehl ausgelöst wird, um ein Adressbuch des Mobiltelefons in die Freisprechanlage zu kopieren, so dass innerhalb der Freisprechanlage eine eingehende Telefonnummer mit einem Namen verknüpft werden kann, um zusätzlich oder anstelle der eingehenden Telefonnummer den korrespondierenden Namen aus dem Adressbuch auf dem Display darzustellen. Insbesondere kann bei einer Verbindung des Mobiltelefons mit der Freisprechanlage, wenn das Mobiltelefon und die Freisprechanlage miteinander einen ersten Handshake absolvieren, das in dem Mobiltelefon gespeicherte Adressbuch ausgelesen und vorzugsweise in einer Speichereinheit der Freisprechanlage gespeichert werden. Dies erfolgt insbesondere durch das syncML Protokoll, so dass ein Datenabgleich vereinfacht ist. Insbesondere ist es vorzugsweise wahlweise möglich, dass das eingelesene Adressbuch in der Speichereinheit gespeichert bleibt. Dadurch ist es möglich das in der Speichereinheit gespeicherte Adressbuch bei der nächsten Verbindung mit dem Mobiltelefon zu synchronisieren und/oder ein Update durchzuführen. Dies ermöglicht es ferner beispielsweise mit Hilfe eines Drehknopfes und/oder eines Drehrades die einzelnen gespeicherten Daten durchzugehen, um eine zu wählende einem bestimmten Namen zugeordnete Telefonnummer auszuwählen. Vorzugsweise ist mindestens eine Schnellwahltaste vorgesehen, die mit einer individuell definierten Telefonnummer belegt sein kann, um ein längeres Suchen nach häufig benutzten Telefonnummern zu vermeiden. Insbesondere bei einem zwischenzeitlichen Verlust des Mobiltelefons kann auch das Adressbuch des Mobiltelefons mit den in der Speichereinheit gespeicherten Daten synchronisiert und/oder geupdatet werden. Besonders bevorzugt können in der Speichereinheit mehrere unterschiedliche Adressbücher von unterschiedlichen Mobiltelefonen gespeichert und verwaltet werden. Vorzugsweise kann von einem Nutzer ausgewählt werden, ob auch Informationen des eingelesenen Adressbuchs des eigenen Mobiltelefons für andere mit der Freisprechanlage kommunizierende Mobiltelefone verwendet werden dürfen, falls nicht das eigene sondern ein anderes Mobiltelefon mit der Freisprechanlage kommuniziert. Falls in diesem Fall zu ein und derselben Telefonnummer unterschiedliche Namen in unterschiedlichen Adressbüchern hinterlegt sind, wird vorzugsweise der Name desjenigen Adressbuches verwendet, das dem aktuell kommunizierenden Mobiltelefon zugeordnet ist.

Vorzugsweise ist eine Fernbedienung vorgesehen, mit dessen Hilfe die Freisprechanlage und/oder das Mobiltelefon insbesondere drahtlos, beispielsweise über Bluetooth und/oder Infrarot, bedient werden kann. Dadurch kann je nach Fahrsituation die Bedienung vereinfacht werden. Insbesondere kann auch eine im hinteren Bereich eines Kraftfahrzeugs sitzende Bedienperson die Freisprechanlage bedienen, so dass der Fahrer nicht seine Hände vom Steuer nehmen muss, um die Freisprecheinrichtung zu benutzen. Zusätzlich oder alternativ kann die Freisprechanlage mit Sprachsteuerung ausgestattet sein, um die Freisprechanlage mit Hilfe gesprochener Befehle zu bedienen ohne die Hände vom Steuer nehmen zu müssen.

Das Display ist insbesondere ein hintergrundbeleuchtetes Volldisplay, dessen Farbe vorzugsweise einstellbar ist. Insbesondere kann es mindestens vierzehn Zeichen, das heißt Buchstaben, Zahlen, Sonderzeichen, Grafiken etc. anzeigen, wobei auch mehrere Reihen zur Darstellung von Zeichen vorgesehen sein können, die jeweils die entsprechende Anzahl an Zeichen darstellen können. Dadurch ist es beispielsweise möglich SMS oder Fotos darzustellen. Zusätzlich bzw. Alternativ kann das Display aufklappbar sein. Es ist somit möglich das Display zunächst beispielsweise zum Schutz vor Verschmutzung oder Beschädigung unter einem Deckel zu verstecken und erst bei Bedarf zum Vorschein kommen zu lassen. Ferner können in dem Deckel zusätzliche Bedienelemente vorgesehen sein, um beispielsweise eine Tastatur mit den Buchstaben des Alphabets bereit zu stellen.

Die Befestigungsvorrichtung, mit der die Freisprechanlage mit dem Lenkradring verbunden werden kann, kann beispielsweise derart ausgestaltet sein, dass die Befestigungsvorrichtung vergleichbar zu einem Clip an den Lenkradring aufgeclipst werden kann. Die Befestigungsvorrichtung kann den Lenkradring in einem Winkelbereich von ≥ 180°, insbesondere ≥ 190°, vorzugsweise ≥ 220°, besonders bevorzugt ≥ 270° umgreifen. Die Befestigungsvorrichtung kann den Lenkradring auch im Wesentlichen vollständig umgreifen, indem die Befestigungsvorrichtung beispielsweise ein Band aufweist, das den Lenkrandring umschlingen kann. Die Befestigungsvorrichtung kann insbesondere mehrstückig ausgestaltet sein, um durch das Zusammenspiel der einzelnen Teile eine komfortable und zugleich sichere Befestigung zu erreichen. Besonders bevorzug ist die Befestigungsvorrichtung lösbar, beispielsweise über eine Clip-Verbindung mit der Freisprechanlage verbunden, so dass die Befestigungsvorrichtung als ein eigenständiges Zusatzbauteil ausgeführt werden kann, das ggf. speziell an bestimmte Lenkrad-Typen und/oder unterschiedliche Freisprechanlagen-Generationen angepasst sein kann.

Besonders bevorzugt ist an dem Halteelement und/oder an einer dem Halteelement gegenüberliegenden Seite des Gehäuses ein im montierten Zustand zum Lenkradring weisendes elastisches, insbesondere gummielastisches Anlageelement vorgesehen. Das Anlageelement kann sich beim Befestigen der Befestigungsvorrichtung etwas verformen, so dass das Halteelement von der Rastvorrichtung in einer Position arretiert werden kann, in der eine besonders hohe Haltekraft auf den Lenkradring ausgeübt wird. Zusätzlich bzw. alternativ kann das Halteelement mit einer Rückhaltekraft vorbelastet sein, indem das Halteelement beispielsweise durch eine Feder vorgespannt wird. Dadurch kann die Haltekraft im montierten Zustand zusätzlich erhöht werden. Ferner können durch das Anlageelement Ungenauigkeiten ausgeglichen werden, wenn beispielsweise die Krümmung des am Lenkradring anliegenden Gehäuses nicht exakt mit der Krümmung des Lenkradrings übereinstimmt. Dadurch kann die Freisprechanlage für eine Vielzahl unterschiedlicher Lenkradring-Designs verwendet werden.

Nachfolgend wird die Erfindung unter Bezugnahme auf die anliegenden Zeichnungen anhand bevorzugter Ausführungsformen näher erläutert.

Es zeigen:
- Fig. 1: eine schematische Vorderansicht einer montierten erfindungsgemäßen Freisprechanlage in einer ersten Ausführungsform,
- Fig. 2: eine perspektivische schematische Vorderansicht der Freisprechanlage aus Fig. 1,
- Fig. 3: eine schematische Vorderansicht der montierten erfindungsgemäßen Freisprechanlage in einer zweiten Ausführungsform,
- Fig. 4: eine perspektivische schematische Vorderansicht der Freisprechanlage aus Fig. 3,
- Fig. 5: eine schematische Vorderansicht der montierten erfindungsgemäßen Freisprechanlage in einer dritten Ausführungsform,
- Fig. 6: eine perspektivische schematische Vorderansicht der Freisprechanlage aus Fig. 5,
- Fig. 7: eine schematische Vorderansicht der montierten erfindungsgemäßen Freisprechanlage in einer vierten Ausführungsform,
- Fig. 8: eine perspektivische schematische Vorderansicht der Freisprechanlage aus Fig. 7,
- Fig. 9: eine schematische Vorderansicht der montierten erfindungsgemäßen Freisprechanlage in einer fünften Ausführungsform,
- Fig. 10: eine perspektivische schematische Vorderansicht der Freisprechanlage aus Fig. 9,
- Fig. 11: eine schematische Vorderansicht der montierten erfindungsgemäßen Freisprechanlage in einer sechsten Ausführungsform,
- Fig. 12: eine perspektivische schematische Vorderansicht der Freisprechanlage aus Fig. 11,
- Fig. 13: eine schematische Vorderansicht der montierten erfindungsgemäßen Freisprechanlage in einer siebten Ausführungsform,
- Fig. 14: eine perspektivische schematische Vorderansicht der Freisprechanlage aus Fig. 13 und

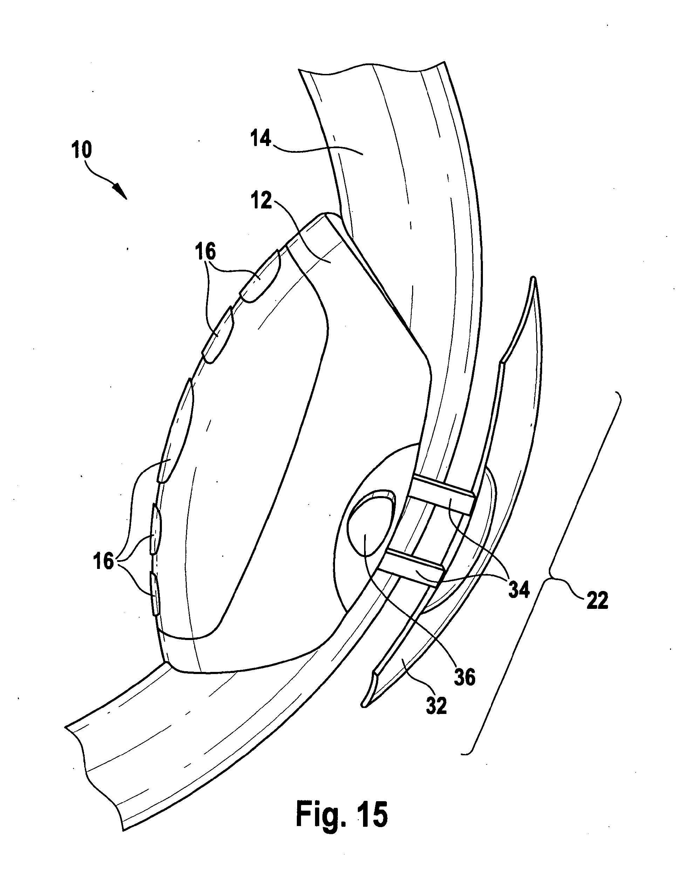

- Fig. 15: eine schematische Vorderansicht einer mit einer Freisprechanlage verbundenen Befestigungsvorrichtung.

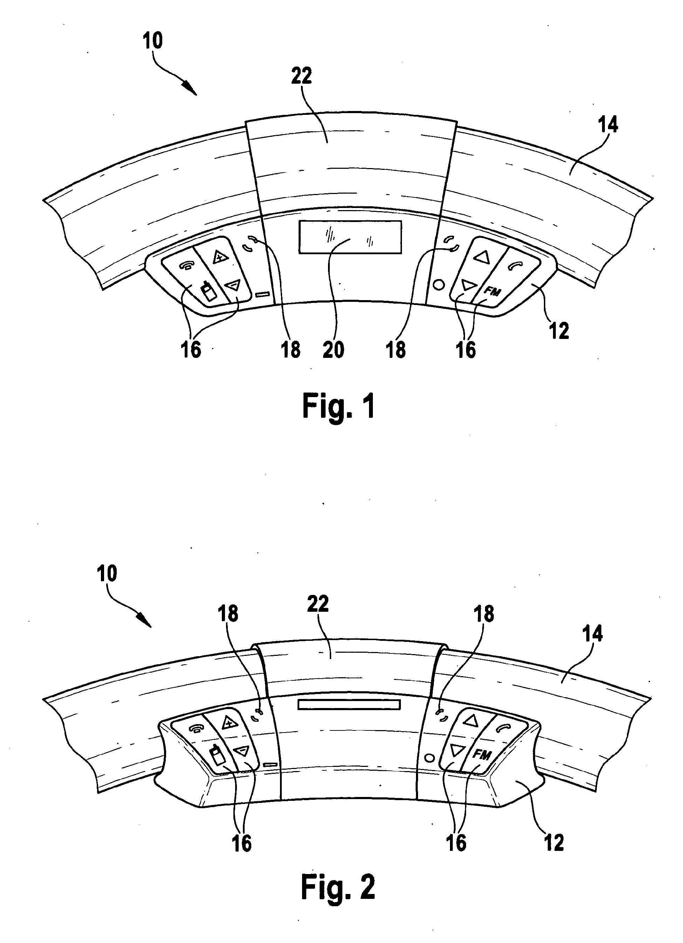

Bei der in Fig. 1 dargestellten erfindungsgemäßen Freisprechanlage 10 ist ein Gehäuse 12 derart an einen Lenkradring 14 eines Kraftfahrzeug-Lenkers angepasst, dass die radial nach außen weisende Kontur des Gehäuses 12 der Krümmung der radial nach innen weisenden Kontur des Lenkradrings 14 folgt. An der Vorderseite der Freisprechanlage 10 sind mehrere als Tasten ausgeführte Bedienungselemente 16 vorgesehen, mit denen die Funktionen der Freisprechanlage 10 wahrgenommen werden können. Ferner sind an der Vorderseite Öffnungen 18 vorgesehen, hinter denen ein Mikrofon und/oder ein Lautsprecher angeordnet sein können. Um die angerufene bzw. anrufende Telefonnummer und/oder Teilnehmernamen ablesen zu können, ist in dem Gehäuse 12 ein Display 20 vorgesehen. Im dargestellten Ausführungsbeispiel, wird das Display 20 zusätzlich von einer durchsichtigen Befestigungsvorrichtung 22 geschützt, mit deren Hilfe das Gehäuse 12 der Freisprechanlage 10 sicher an den Lenkradring 14 aufgeclipst ist. Das Gehäuse 12 liegt im Wesentlichen spaltlos an dem Lenkradring 14 an, da das Gehäuse 12 nicht nur der Krümmung des Lenkradrings 14 folgt, sondern auch in Umfangsrichtung des Lenkradrings 14 derart konturiert ist, dass das Gehäuse 12 an dem Lenkradring 14 anliegt (Fig. 2).

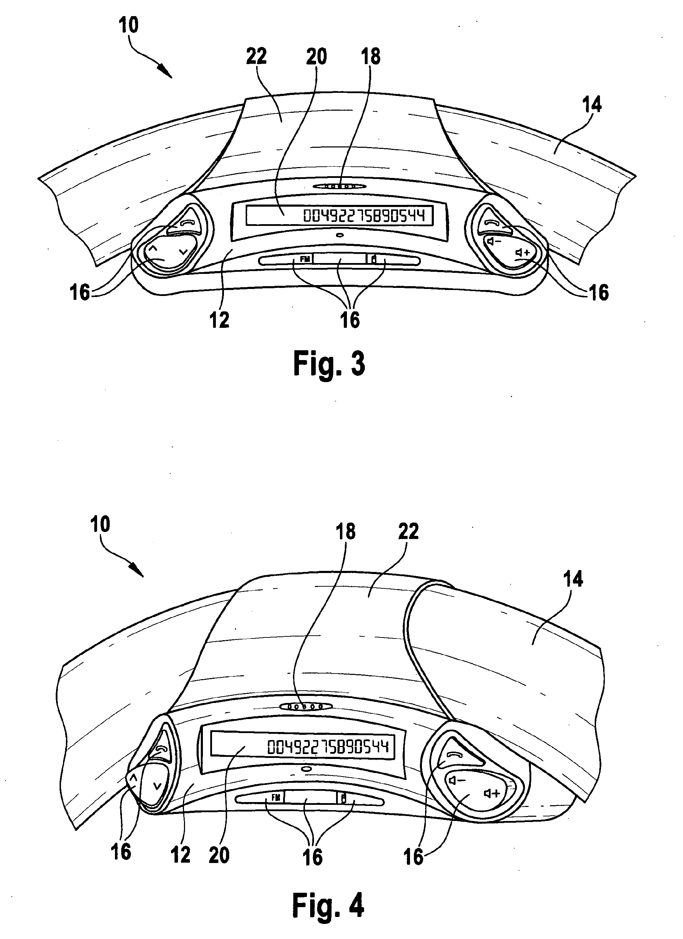

Bei der in Fig. 3 dargestellten Ausführungsform der Freisprechanlage 10 ist die Befestigungsvorrichtung 22 einstückig mit dem Gehäuse 12 verbunden. Die Befestigungsvorrichtung 22 umgreift den Lenkradring 14 in Umfangsrichtung in einem Winkelbereich von deutlich über 190° (Fig. 4).

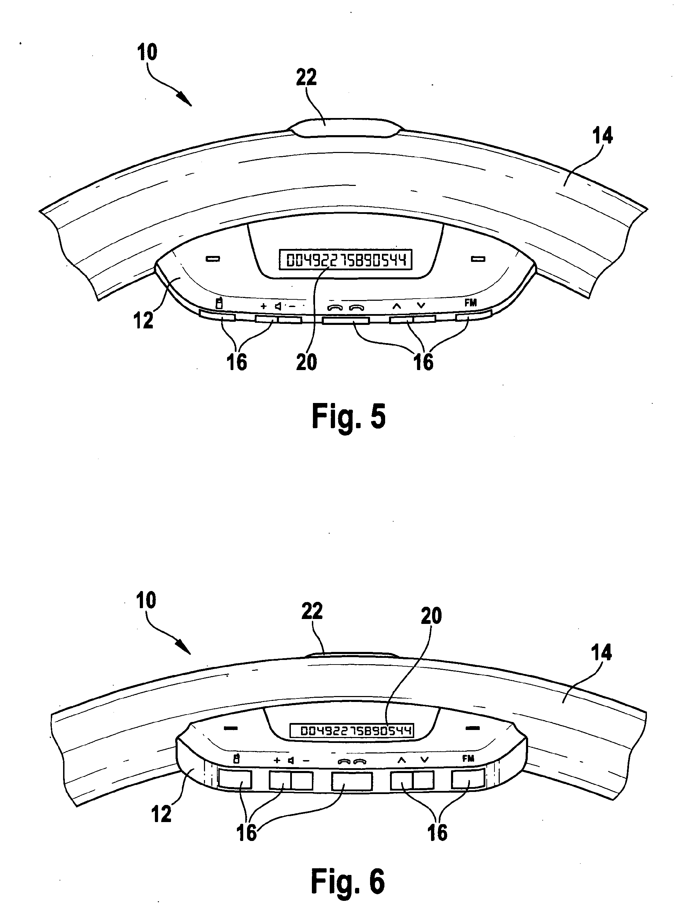

Die in Fig. 5 dargestellte Freisprechanlage 10 weist eine Befestigungsvorrichtung 22 auf, die den Lenkradring 14 von hinten teilweise umgreift. Die Bedienungselemente 16 sind im dargestellten Ausführungsbeispiel seitlich angeordnet (Fig. 6), so dass beim Betätigen der Bedienungselemente 16 das Gehäuse 12 der Freisprechanlage 10 zusätzlich gegen den Lenkradring 14 gedrückt wird, wodurch ein Verrutschen des Gehäuses 12 am Lenkradring 14 vermieden ist.

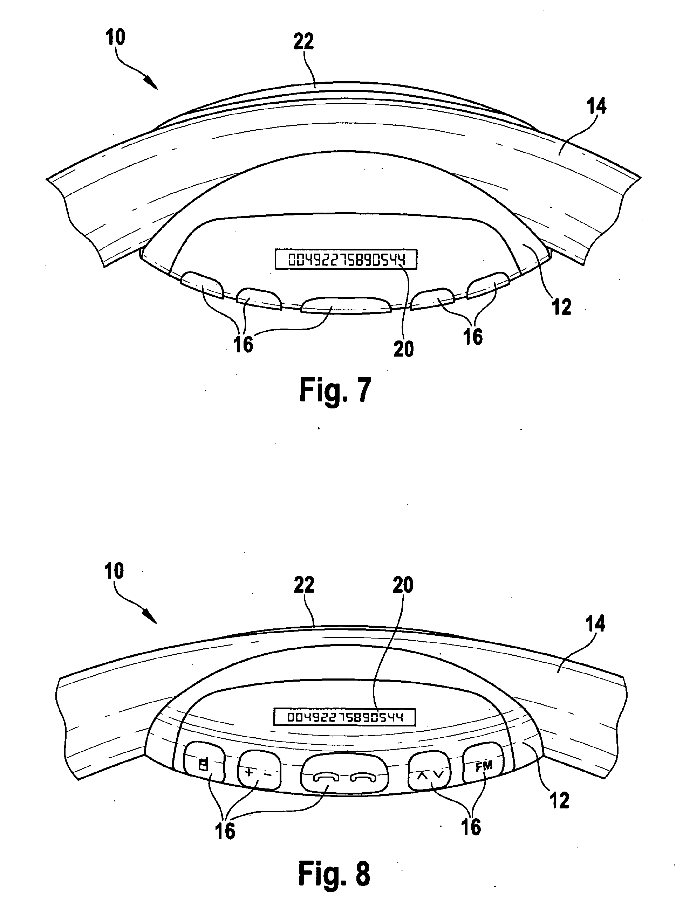

Im Vergleich zu der in Fig. 5 und Fig. 6 dargestellten Freisprechanlage 10 weist die in Fig. 7 und Fig. 8 dargestellte Freisprechanlage eine deutlich breiter ausgeführte Befestigungsvorrichtung 22 auf, deren Kontur insbesondere an die Krümmung des Lenkradrings 14 angepasst ist. Aufgrund der verhältnismäßig großen Kontaktfläche zwischen der Befestigungsvorrichtung 22 bzw. Gehäuse 12 mit dem Lenkradring 14 ergibt sich eine entsprechend große Reibung und somit eine erhöhte Haltekraft, die ein Verrutschen der Freisprechanlage 10 am Lenkradring 14 verhindert.

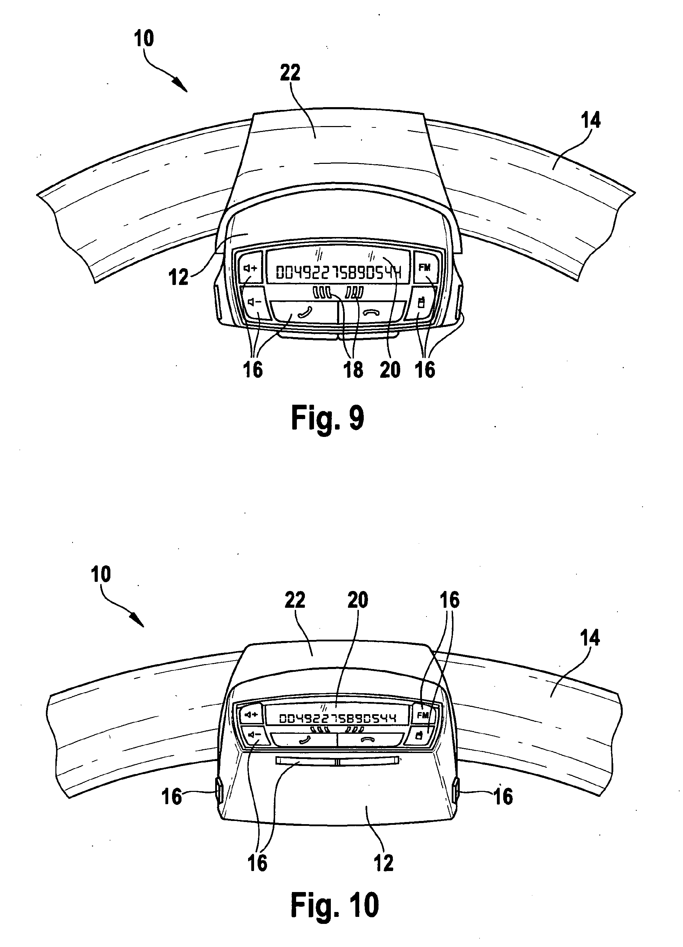

Bei der in Fig. 9 dargestellten Freisprechanlage 10 weist das Display 20 mehr als eine Zeile auf, um Informationen darzustellen. Beispielsweise können sowohl eine Telefonnummer als auch ein dazugehöriger Name dargestellt werden. Die hierfür erforderlichen Daten kann sich die Freisprechanlage 10 über eine nicht dargestellte Kommunikationseinrichtung insbesondere drahtlos beispielsweise über Bluetooth von einem der Freisprechanlage 10 zugeordneten Mobiltelefon beschaffen. Ferner ist es prinzipiell möglich die Bedienungselemente 16 sowohl auf der Vorderseite des Gehäuses 12 (Fig. 9) als auch an den verschiedenen Seitenflächen des Gehäuses12 (Fig. 10) vorzusehen.

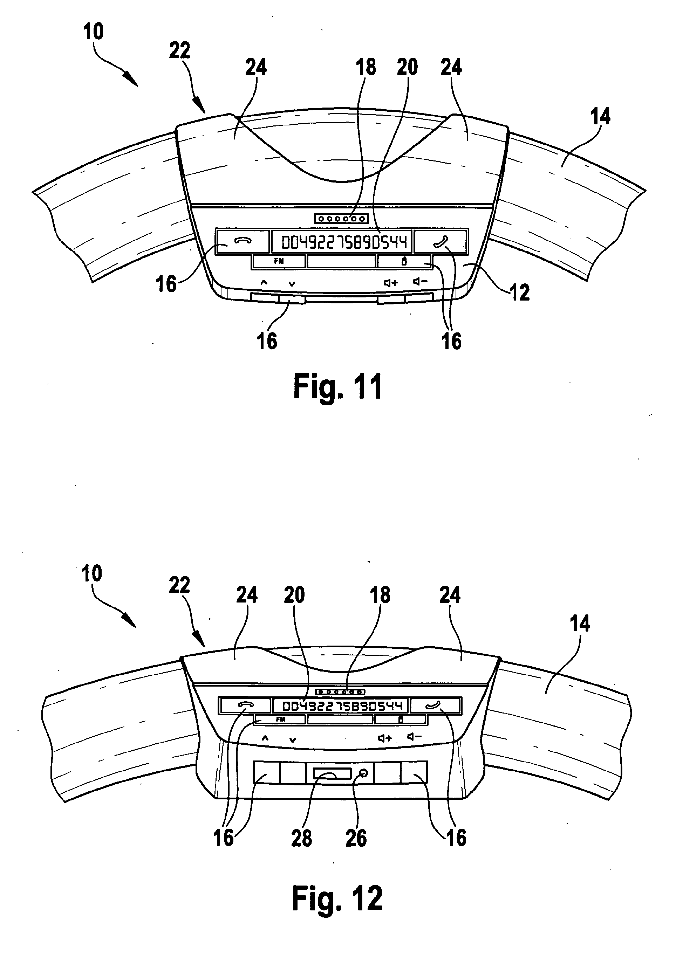

Bei dem in Fig. 11 dargestellten Ausführungsbeispiel der Freisprechanlage 10 weist die Befestigungsvorrichtung 22 zwei von einander beabstandete Arme 24 auf, die den Lenkradring 14 jeweils zumindest teilweise umgreifen. Dadurch wird bei verhältnismäßig geringem Materialeinsatz eine stabile Befestigung erreicht. Ferner ist es möglich über einen Elektroanschluss 26 eine externe Energiequelle anzuschließen, beispielsweise um im Gehäuse 12 angeordnete Akkus zur Energieversorgung der Kommunikationseinrichtung aufzuladen (Fig. 12). Insbesondere ist es möglich über einen USB-Anschluss 28 beispielsweise einen USB-Stick anzuschließen, um beispielsweise auf dem USB-Stick gespeicherte Musik über die Freisprechanlage 10 abzuspielen.

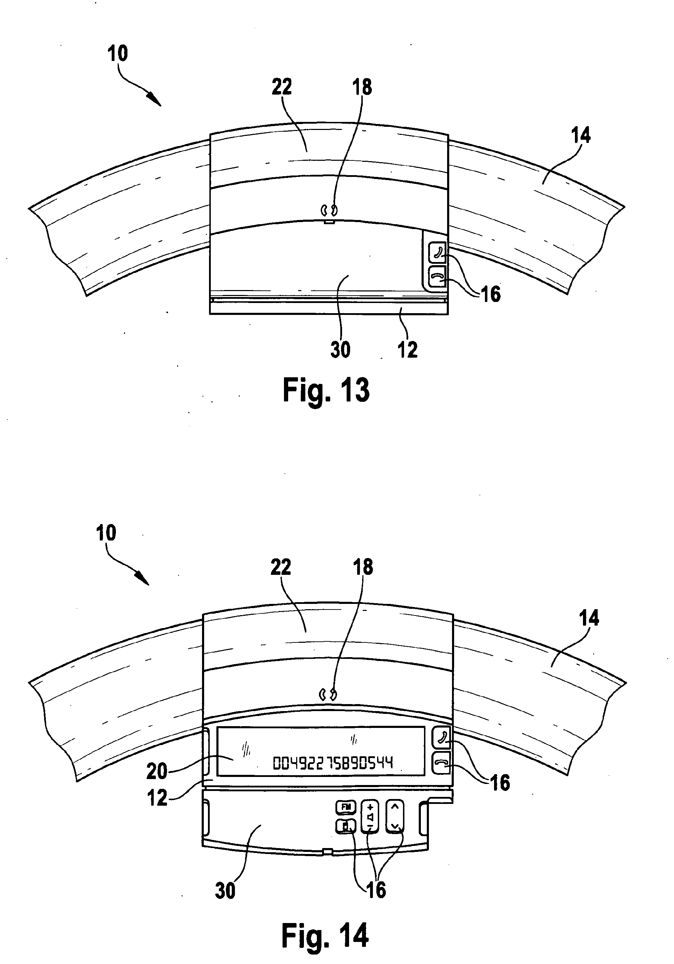

Die in Fig. 13 dargestellte Freisprechanlage 10 weist ein mit einem Deckel 30 verschlossenes Display 20 auf. Im aufgeklappten Zustand (Fig. 14) ist der nutzbare Raum der Freisprechanlage deutlich vergrößert. Wenn die Freisprechanlage 10 oder zumindest das Display 20 nicht benötigt wird, ist der Platzbedarf der Freisprechanlage 10 verhältnismäßig klein. Erst im Bedarfsfall kann besonders viel Raum zur Verfügung gestellt werden, um beispielsweise besonders viele Bedienungselemente 16 vorzusehen. Beispielsweise können in den Deckel 30 zusätzliche Bedienungselemente 16 angeordnet werden, um einen CD-Player, ein Autoradio etc. zu bedienen oder mehrere Buchstaben-Tasten beispielsweise zum Schreiben von SMS.

Die Befestigungsvorrichtung 22 kann ein Halteelement 32 aufweisen, das über Rastelemente 34 mit dem Gehäuse 12 der Freisprechanlage 10 arretiert werden kann. Zum Lösen der Arretierung ist ein Knopf 36 vorgesehen, der vom Fahrer zum Abnehmen der Freisprechanlage 10 von dem Lenkradring 14 gedrückt werden kann. Zur Befestigung der Freisprechanlage 10 mit dem Lenkradring 14 kann der Fahrer das Halteelement 32 auf den Lenkradring 14 zu drücken, wobei die Rastelemente 34 hierbei mehrere Rastpositionen durchlaufen können. Wenn sich die Rastelemente 34 in der maximal möglichen Einstecktiefe befinden, ist die Freisprechanlage 10 sowohl formschlüssig als auch reibschlüssig mit dem Lenkradring 14 verbunden.

## Patentansprüche

1. Freisprechanlage für ein Mobiltelefon, mit
einem Gehäuse (12),
einer in dem Gehäuse (12) angeordneten elektrischen Kommunikationseinrichtung zur drahtlosen Kommunikation mit dem Mobiltelefon und
einem mit der Kommunikationseinrichtung verbunden Mikrofon
wobei mit dem Gehäuse (12) eine Befestigungsvorrichtung (22) zur lösbaren Verbindung
mit einem Lenkradring (14) eines Kraftfahrzeug-Lenkrads lösbar verbunden ist.
wobei das Gehäuse (12) entsprechend der Krümmung des Lenkradrings (14) bogenförmig ausgestaltet ist und und die Befestigungsvorrichtung (22) ein in radialer Richtung relativ zum Gehäuse (12) bewegbares Halteelement (32) zur drehfesten Fixierung der Freisprechanlage (10) mit dem Lenkradring (14) aufweist., wobei sämtliche Elemente der Freisprechanlage (10) in einem gemeinsamen Bauteil zusammengefasst sind.

2. Freisprechanlage nach Anspruch 1 **dadurch gekennzeichnet, dass** die Befestigungsvorrichtung (22) an die Kontur des Lenkradrings (14) zumindest teilweise angepasst ist, wobei das Gehäuse (12) insbesondere an die radial nach innen weisende Kontur des Lenkradrings (14) angepasst ist.

3. Freisprechanlage nach Anspruch 1 oder 2 **dadurch gekennzeichnet, dass** an dem Halteelement (32) und/oder an einer dem Halteelement (32) gegenüberliegenden Seite der Freisprechanlage (10) ein elastisches, insbesondere gummielastisches Anlageelement angeordnet ist.

4. Freisprechanlage nach einem der Ansprüche 1 bis 3 **dadurch gekennzeichnet, dass** die Befestigungsvorrichtung (22) eine Feststelleinrichtung, insbesondere eine Schraubverbindung und/oder eine Rastverbindung, zur Fixierung der Befestigungsvorrichtung (22) im montierten Zustand aufweist.

5. Freisprechanlage nach einem der Ansprüche 1 bis 4 **dadurch gekennzeichnet, dass** mindestens ein mit der Kommunikationseinrichtung verbundener Lautsprecher vorgesehen ist und das Gehäuse insbesondere eine im montierten Zustand auf einen Fahrer weisende Lautsprecherausgänge aufweist.

6. Freisprechanlage nach einem der Ansprüche 1 bis 5 **dadurch gekenntzeichnet, dass** die Befestigungsvorrichtung (22) derart ausgestaltet ist, dass im montierten Zustand die Befestigungsvorrichtung (22) den Lenkradring (14) in einem Winkelbereich von ≥ 180°, insbesondere ≥ 190°, vorzugsweise ≥ 220°, besonders bevorzugt ≥ 270° umreift.

7. Freisprechanlage nach einem der Ansprüche 1 bis 6 **dadurch gekennzeichnet, dass** die Kommunikationseinrichtung mit dem Mobiltelefon drahtlos, insbesondere per Funk, vorzugsweise über Bluetooth kommuniziert.

8. Freisprechanlage nach einem der Ansprüche 1 bis 7 **dadurch gekennzeichnet, dass** die Kommunikationseinrichtung derart ausgestaltet ist, dass die Kommunikationseinrichtung zur Abgabe von Geräuschen mit einer externen einen Lautsprecher aufweisenden Tonanlage, insbesondere einem Autoradio und/oder einem CD-Player insbesondere über A2DP kommunizieren kann.

9. Freisprechanlage nach einem der Ansprüche 1 bis 8 **gekennzeichnet durch** ein insbesondere aufklappbares Display (20) zur Darstellung von Informationen, wobei das Display (20) insbesondere mit dem Mobiltelefon und/oder einem Positionsbestimmungssystem kommuniziert und das Display (20) vorzugsweise als ein farblich einstellbares hintergrundbeleuchtetes Volldisplay zur Darstellung von mindestens vierzehn Zeichen pro Reihe ausgestaltet ist.

## Claims

1. Hands-free installation for a mobile telephone, comprising
a housing (12),
an electrical communication device, located in the housing (12), for wireless communication with the mobile telephone and
a microphone connected to the communication device,
whereas a mounting apparatus (22) for detachable connection to a steering-wheel ring (14) of a motor vehicle steering wheel is detachably connected to the housing (12),
whereas the housing (12) is in arcuate form corresponding to the curvature of the steering-wheel ring (14) and the mounting apparatus (22) comprises a holding element (32), movable in a radial direction relative to the housing (12), for fixing the hands-free installation (10) to the steering-wheel ring (14) such that it cannot rotate,
whereas all elements of the hands-free installation are combined in a common component.

2. Hands-free installation according to claim 1, **characterized in that** the mounting apparatus (22) at least partly matches the contour of the steering-wheel ring (14), whereby the housing (12) matches particularly the radially inwardly pointing contour of the steering-wheel ring (14).

3. Hands-free installation according to claim 1 or 2, **characterized in that** an elastic, particularly a rubber-elastic, contact element is arranged on the holding element (32) and/or a side of the hands-free installation (10), which is opposite to the holding element (32).

4. Hands-free installation according to any one of the claims 1 to 3, **characterized in that** the mounting apparatus (22) has a locking device, particularly a screw connection and/or a latch connection, for fixing the mounting apparatus (22) in the mounted state.

5. Hands-free installation according to any one of the claims 1 to 4, **characterized in that** at least one loudspeaker connected to the communication device is provided and the housing comprises particularly loudspeaker outputs pointing to a driver in the mounted state.

6. Hands-free installation according to any one of the claims 1 to 5, **characterized in that** the mounting apparatus (22) is in a form such that in the mounted state the mounting apparatus (22) encompasses the steering-wheel ring (14) in an angular range of ≥ 180°, particularly ≥ 190°, preferably ≥ 220°, particularly preferably ≥ 270°.

7. Hands-free installation according to any one of the claims 1 to 6, **characterized in that** the communication device communicates with the mobile telephone wirelessly, particularly by radio, preferably by means of Bluetooth.

8. Hands-free installation according to any one of the claims 1 to 7, **characterized in that** the communication device is in a form such that the communication device can communicate by communicating with an external sound installation which comprises a loudspeaker, particularly with a car radio and/or with a CD player, particularly using A2DP for outputting sounds.

9. Hands-free installation according to any one of the claims 1 to 8, **characterized by** a particularly fold-back display (20) for presenting information, whereas the display (20) communicates particularly with the mobile telephone and/or a position finding system and the display (20) is preferably in the form of a colour-adjustable backlit full display for presenting at least fourteen characters per line.

## Revendications

1. Installation mains libres pour un téléphone portable, comprenant :
un boîtier (12),
un dispositif de communication électrique disposé dans le boîtier (12) pour communiquer sans fil avec le téléphone portable, et
un microphone connecté au dispositif de communication,
un dispositif de fixation (22) étant connecté au boîtier (12) pour la connexion détachable à une roue de volant de direction (14) d'un volant de direction d'un véhicule automobile,
le boîtier (12) étant configuré sous forme courbe d'une manière correspondant à la courbure de la roue de volant de direction (14) et le dispositif de fixation (22) présentant un élément de retenue (32) déplaçable dans la direction radiale par rapport au boîtier (12) pour la fixation solidaire en rotation de l'installation mains libres (10) à la roue de volant de direction (14), tous les éléments de l'installation mains libres (10) étant rassemblés en un composant commun.

2. Installation mains libres selon la revendication 1, **caractérisée en ce que** le dispositif de fixation (22) est adapté au moins en partie au contour de la roue de volant de direction (14), le boîtier (12) étant notamment adapté au contour tourné radialement vers l'intérieur de la roue de volant de direction (14).

3. Installation mains libres selon la revendication 1 ou 2, **caractérisée en ce qu'**un élément d'appui élastique, en particulier en caoutchouc élastique, est disposé sur l'élément de retenue (32) et/ou sur un côté de l'installation mains libres (10) opposé à l'élément de retenue (32).

4. Installation mains libres selon l'une quelconque des revendications 1 à 3, **caractérisée en ce que** le dispositif de fixation (22) présente un dispositif d'attache, en particulier une connexion vissée et/ou une connexion par encliquetage, pour la fixation du dispositif de fixation (22) dans l'état monté.

5. Installation mains libres selon l'une quelconque des revendications 1 à 4, **caractérisée en ce qu'**au moins un haut-parleur connecté au dispositif de communication est prévu et le boîtier présente en particulier, dans l'état monté, des sorties de haut-parleur tournées vers un conducteur.

6. Installation mains libres selon l'une quelconque des revendications 1 à 5, **caractérisée en ce que** le dispositif de fixation (22) est configuré de telle sorte que dans l'état monté le dispositif de fixation (22) vienne en prise autour de la roue de volant de direction (14) suivant une plage angulaire ≥ 180°, en particulier ≥ 190°, de préférence ≥ 220°, et particulièrement préférablement ≥ 270°.

7. Installation mains libres selon l'une quelconque des revendications 1 à 6, **caractérisée en ce que** le dispositif de communication communique avec le téléphone portable sans fil, notamment par radio, de préférence par Bluetooth.

8. Installation mains libres selon l'une quelconque des revendications 1 à 7, **caractérisée en ce que** le dispositif de communication est configuré de telle sorte que le dispositif de communication peut communiquer pour émettre des sons avec une installation sonore externe présentant un haut-parleur, notamment un autoradio et/ou un lecteur de CD, en particulier par le biais d'un A2DP (profil de distribution audio avancé).

9. Installation mains libres selon l'une quelconque des revendications 1 à 8, **caractérisée par** un affichage (20) notamment rabattable pour afficher des informations, l'affichage (20) communiquant notamment avec le téléphone portable et/ou un système de détermination de position, et l'affichage (20) étant configuré de préférence sous forme d'affichage total à couleur ajustable et à rétro-éclairage, pour afficher au moins quatorze signes par ligne.
